Europäisches Patentamt

European Patent Office

Office européen des brevets

(19)

(11) Veröffentlichungsnummer : **0 045 866**
**B1**

(12) **EUROPÄISCHE PATENTSCHRIFT**

(45) Veröffentlichungstag der Patentschrift :
26.10.83

(21) Anmeldenummer : 81105661.3

(22) Anmeldetag : 18.07.81

(51) Int. Cl.³ : **B 27 K 3/52**

(54) **Holzschutzmittel.**

(30) Priorität : **09.08.80 DE 3030242**

(43) Veröffentlichungstag der Anmeldung :
**17.02.82 Patentblatt 82/07**

(45) Bekanntmachung des Hinweises auf die Patenterteilung : **26.10.83 Patentblatt 83/43**

(84) Benannte Vertragsstaaten :
**AT BE CH DE FR GB IT LI LU NL SE**

(56) Entgegenhaltungen :
**DE A 2 140 051**

**CENTRAL PATENTS INDEX, Basic Abstracts
Journal, Section C, AGDOC, Week Y 28, 1977, Nr.
49624y Derwent Publications London, G.B.**

**Die Akte enthält technische Angaben, die nach dem
Eingang der Anmeldung eingereicht wurden und die
nicht in dieser Patentschrift enthalten sind.**

(73) Patentinhaber : **Dr. Wolman GmbH
Dr.-Wolman-Strasse 31-33
D-7573 Sinzheim (DE)**

(72) Erfinder : **Goettsche, Reimer, Dr.
Waldstrasse 27
D-7570 Baden-Baden (DE)**
Erfinder : **Marx, Hans-Norbert
Mozartweg 8
D-7580 Buehl-Weitenung (DE)**

(74) Vertreter : **Schweiss, Werner, Dr.
BASF Aktiengesellschaft Patentabteilung
Carl-Bosch-Strasse 38
D-6700 Ludwigshafen (DE)**

Holzschutzmittel

Die vorliegende Erfindung betrifft ein Holzschutzmittel auf der Grundlage einer wäßrigen Mischung von Borsäure, einem organischen Amin und Borax.

Es ist bekannt, ein Konzentrat mit einem hohen Gehalt an Borsäure, beispielsweise eine Mischung von Diäthanolamin, Borsäure und Wasser als Holzschutzmittel zu verwenden (DE-C 21 40 051).

Bei Verwendung von Alkanolaminen als Lösungsmittel für die Borsäure können die Konzentrate als Flammschutzanstriche nur bedingt eingesetzt werden. Diese Konzentrate sind stark hygroskopisch und ergeben trotz anfänglicher Abtrocknung nach kurzer oder längerer Zeit je nach Luftfeuchtigkeit und Temperatur stark klebende Anstriche auf dem Holz.

Bei Verwendung anderer Amine, z. B. Polyaminen erfolgt eine zu starke Trocknung auf dem Holz, so daß die Anstriche auf Dauer spröde werden und Rißbildungen aufweisen. Bei der Verwendung als Holzschutzmittel im Randschutzverfahren (Streichen, Spritzen, Tauchen) mit wäßrigen Lösungen (üblicherweise 90-75 Gew.% Wasser) ist das Eindringen der Borsäure in das Holz durch das mangelnde Eindringen des Amins, das an der Oberfläche des Holzes sofort gebunden wird, beeinträchtigt.

Es wurde gefunden, daß ein Holzschutzmittel auf der Grundlage einer wäßrigen Mischung von Borsäure mit einem wasserlöslichen organischen Amin, das Natriumpolyborat oder eine Mischung aus Borsäure und Borax enthält, die oben aufgezeigten Nachteile nicht hat. Das erfindungsgemäße Holzschutzmittel eignet sich sowohl zum Schutz des Holzes vor Befall durch Pilze und Insekten als auch als Flammschutzmittel zum Schutz des Holzes vor Entflammung durch Feuer.

Unter einem wasserlöslichen organischen Amin ist beispielsweise zu verstehen : Ein primäres, sekundäres, tertiäres organisches Amin oder ein Diamin, Triamin, Tetramin oder Pentamin oder ein Hydroxyderivat oder Methoxyderivat der genannten Amine. Solche Amine sind beispielsweise Monoäthanolamin, Diäthanolamin, Triäthanolamin, Monomethyläthanolamin, Methyldiäthanolamin, Äthylamin, Diäthylamin, Propylamin, Methoxyäthylamin, Methoxypropylamin, Dimethyläthanolamin, 1,2-Propylendiamin, 3-Amino-1-Methylaminopropan, Dipropylentriamin, Tripropylentetramin, Tetrapropylenpentamin oder ihre Mischungen. Monoäthanolamin wird bevorzugt.

Bei den meisten Aminen genügt ein Einrühren der Borsäure in die Amine. Da die erhaltenen Flüssigkeiten jedoch zu viskos sein können, kann bei der Verarbeitung eine geringe Wasserzugabe empfehlenswert sein. Das Konzentrat läßt sich oberhalb eines pH-Wertes von etwa 6,5 bis 7,5 leicht herstellen. Unterhalb dieser pH-Werte wird das Lösen der Borsäure in den Aminen oder Polyaminen erschwert. Ein pH-Wert von etwa 7,5 bis 8,0 entspricht einem Mischungsverhältnis von etwa 1 Mol Amin zu 3 bis 4 Mol Borsäure. Bei den Polyaminen muß jeweils etwa 1 Stickstoffatom des Polyaminmoleküls mit 3 Mol Borsäure reagieren, d. h. es ergibt sich z. B. das Mischungsverhältnis von 1 Mol Triamin zu 9 Mol Borsäure. Durch Erhöhen des Amin- oder Polyaminanteiles lassen sich höhere pH-Werte beliebig einstellen.

Natriumpolyborat ist eine feste, wasserlösliche Verbindung. Sie entsteht bei der Umsetzung von Borsäure mit Borax in Wasser. Das erfindungsgemäße Holzschutzmittel kann daher Natriumpolyborat oder eine Mischung aus Borsäure oder Borax enthalten, da diese, wie oben dargelegt, in das Natriumpolyborat übergeht. Bei der Herstellung des erfindungsgemäßen Holzschutzmittels wird der Zusatz einer Mischung von Borsäure und Borax bzw. der abwechselnde Zusatz von Borsäure und Borax zu der wäßrigen Mischung aus dem wasserlöslichen Amin und Borsäure bevorzugt.

Das erfindungsgemäße Holzschutzmittel enthält beispielsweise 20 bis 60 Gew.% der wäßrigen Mischung aus Borsäure und einem wasserlöslichen organischen Amin. Hierzu werden beispielsweise 40 bis 80 % an Natriumpolyborat oder vorzugsweise an der Mischung aus Borsäure und Borax zugesetzt. Das Gewichtsverhältnis Borsäure zu Borax in der zugesetzten Mischung beträgt beispielsweise 2 : 1 bis 1 : 1, 2, vorzugsweise 1 : 1.

Das erfindungsgemäße Holzschutzmittel ist beispielsweise eine viskose Holz- und Feuerschutzpaste mit einem Gehalt von insgesamt 40 % (Gew.%) $B_2O_3$, die in Wasser von 20 °C eine Löslichkeit von über 25 % besitzt.

Die Paste erhält man beispielsweise durch langsames Einrühren von Natriumpolyborat in die Borsäure-Amin-Mischung oder durch Einrühren von Borsäure/Borax in diese Mischung. Hierbei entsteht während des Rührvorganges durch Reaktion zwischen Borsäure und Borax unter Abspaltung von Wasser Natriumpolyborat, das in feinst kristalliner Form ausfällt (1-10 μ) und dann zusammen mit der Borsäure-Amin-Mischung die Paste bildet.

Das Mischungsverhältnis in der Mischung aus Borsäure/Borax wird in Abhängigkeit des pH-Wertes der Borsäure-Amin-Mischung so gewählt, daß das erfindungsgemäße Holzschutzmittel und seine wäßrigen Lösungen einen pH-Wert zwischen pH 6 und 8 bei 20 °C besitzen. Dem erfindungsgemäßen Holzschutzmittel kann nach Bedarf mehr oder weniger Wasser zugesetzt werden, um die gewünschte Viskosität einzustellen.

Durch Zusatz von Verdickungs- und Thixotropiermitteln kann das Absetzverhalten bzw. das anstrichtechnische Verhalten des Holzschutzmittels verbessert werden.

Beispiel 1

Bor-Amin-Konzentrat 1, bestehend aus :

20 Teilen (Gew. teilen) Monoäthanolamin
60 Teilen Borsäure
20 Teilen Wasser

Holzschutzmittel, bestehend aus :

33 Teilen Bor-Amin-Konzentrat 1
67 Teilen Borax/Borsäure 1 : 1

Herstellung :

Das Bor-Amin-Konzentrat wird in einem Rührbehälter eingefüllt und Borsäure und Borax abwechselnd unter Rühren zugegeben. Der Rührvorgang wird so lange aufrechterhalten, bis die Borsäure bzw. Borax-Kristalle aufgelöst sind und sich das Natriumpolyborat gebildet und abgeschieden hat.

Anstriche mit dem Holzschutzmittel auf Holz (300-450 g/m$^2$ in 2 Arbeitsgängen aufgetragen) trocknen sehr schnell. Sie sind nicht hygroskopisch und kleben bzw. verspröden auch nach längerer Zeit nicht.

Anstrichverhalten als Feuerschutzmittel
Auftrag : 350 g/m$^2$
Lagerung bei ca. 75 % Luftfeuchte/20 °C — Dauer 4 Wochen

| Bor-Amin-Konzentrat 1 | Holzschutzmittel gemäß Beispiel 1 : |
|---|---|
| klebt stark nach der Trocknung. | Trocknet ohne Rißbildung, nicht spröde, klebt nicht. |

Bei Hitzeeinwirkung bildet sich auf dem Holz aus dem Holzschutzmittel gemäß Beispiel 1 eine mikroskopische Schicht aus Bortrioxydschaum unter Abspaltung von Wasser und diese Schicht wirkt isolierend auf das darunterliegende Holz. Das normal entflammbare Holz wird durch den Anstrich schwerentflammbar.

Eindringvermögen als Holzschutzmittel.

Probehölzer werden mit 10 %igen wäßrigen Lösungen gestrichen und nach 7 Tagen wird die Eindringtiefe durch Prüfung des Holzes mit Kurkumareagenz bestimmt.

| Bor-Amin-Konzentrat 1 | Holzschutzmittel gemäß Beispiel 1 : |
|---|---|
| Auftrag 50 g Konzentrat/m$^2$ mittlere Eindringung (fasergesättigt)    3,6 mm | Auftrag 50 g/m$^2$  6,2 mm |

Beispiel 2

Bor-Amin-Konzentrat 2

15 Teile Diäthylentriamin
20 Teile Wasser
65 Teile Borsäure

Holzschutzmittel bestehend aus :

50 Teilen Bor-Amin-Konzentrat 2
50 Teilen Borsäure/Borax (1,2 : 1)

Herstellung wie unter Beispiel 1
Anstrichverhalten als Feuerschutzmittel
Auftrag : 350 g/m$^2$
Lagerung bei ca. 65 % Luftfeuchte/20 °C Dauer 4 Wochen

| Bor-Amin-Konzentrat 2 | Holzschutzmittel gemäß Beispiel 2 |
|---|---|
| Nach der Trocknung : | Nach der Trocknung : |

**0 045 866**

| trocken mit Rißbildung | trocken ohne Rißbildung nicht spröde, klebt nicht. |

Eindringvermögen als Holzschutzmittel Probehölzer werden mit 10 %igen Lösungen gestrichen und nach 7 Tagen wird die Eindringung mit Kurkumareagenz bestimmt.

| Bor-Amin-Konzentrat 2 | Holzschutzmittel gemäß Beispiel 2 |
| mittlere Eindringung (fasergesättigt)     3,2 mm | 6,0 mm |

Durch Zusätze von Pigmentpräparationen oder Farbstoffen lassen sich gefärbte Anstriche bzw. Holzschutzmittel-Lösungen herstellen. Durch Zusatz von Netzmitteln wird die sofortige Benetzung des Holzes durch das Holzschutzmittel verbessert.

### Ansprüche

1. Holzschutzmittel auf der Grundlage einer wäßrigen Mischung von Borsäure mit einem wasserlöslichen organischen Amin, dadurch gekennzeichnet, daß das Holzschutzmittel zusätzlich 40 bis 80 Gew.% Natriumpolyborat oder eine Mischung aus Borsäure und Borax enthält.

2. Holzschutzmittel nach Anspruch 1, dadurch gekennzeichnet, daß es Borsäure und Borax im Gewichtsverhältnis 2 : 1 bis 1 : 1,2 enthält, wobei die als Salz des organischen Amins vorliegende Borsäure nicht berücksichtigt ist.

### Claims

1. A wood preservative based on an aqueous mixture of boric acid and a water-soluble organic amine and additionally containing 40 to 80 % by weight of sodium polyborate or a mixture of boric acid and borax.

2. A wood preservative as claimed in claim 1, which contains boric acid and borax in a weight ratio of from 2 : 1 to 1 : 1.2, leaving out of account the boric acid present as the salt of the organic amine.

### Revendications

1. Agent de protection du bois à base d'un mélange aqueux d'acide borique et d'amine organique soluble dans l'eau, caractérisé par le fait que l'agent de protection du bois contient en outre 40 à 80 % en poids de polyborate de sodium ou d'un mélange d'acide borique et de borax.

2. Agent de protection du bois selon la revendication 1, caractérisé par le fait qu'il contient de l'acide borique et du borax en rapport en poids de 2/1 à 1/1,2, en ne tenant pas compte de l'acide borique présent sous forme de sel de l'amine organique.

4